# EUROPÄISCHE PATENTSCHRIFT

(11) **EP 2 396 718 B1**
(45) Veröffentlichungstag und Bekanntmachung des Hinweises auf die Patenterteilung: **23.05.2018**
(21) Anmeldenummer: 10711599.0
(22) Anmeldetag: 12.02.2010
(51) Int. Cl.: G06F 3/12

(54) **VERFAHREN UND ANORDNUNG ZUR ERMITTLUNG VON DRUCKERN, SOWIE EIN ENTSPRECHENDES COMPUTERPROGRAMM UND EIN ENTSPRECHENDES COMPUTERLESBARES SPEICHERMEDIUM**
METHOD AND ARRANGEMENT FOR DETECTING PRINTERS, A CORRESPONDING COMPUTER PROGRAM, AND A CORRESPONDING COMPUTER-READABLE STORAGE MEDIUM
PROCÉDÉ ET SYSTÈME POUR DÉTERMINER DES IMPRIMANTES, ET PROGRAMME D'ORDINATEUR CORRESPONDANT ET SUPPORT D'ENREGISTREMENT CORRESPONDANT LISIBLE PAR ORDINATEUR

(30) Priorität: 13.02.2009 DE 102009009445
(43) Veröffentlichungstag der Anmeldung: 21.12.2011
(73) Patentinhaber: Cortado AG, 10559 Berlin (DE)
(72) Erfinder: MICKELEIT, Carsten, 12205 Berlin (DE); TRAPPE, Bernd, 15366 Hoppegarten OT Birkenstein (DE); KOMISCHKE, Martin, 12621 Berlin (DE); WEESE, Thomas, 13627 Berlin (DE)
(74) Vertreter: Gulde & Partner
(86) Internationale Anmeldenummer: PCT/EP2010/051813
(87) Internationale Veröffentlichungsnummer: WO 2010/092161

(56) Entgegenhaltungen:
- EP-A2- 1 460 529
- US-A1- 2003 078 965
- US-A1- 2004 070 779
- US-A1- 2005 012 951
- US-A1- 2005 044 479

## Beschreibung

Die Erfindung betrifft ein Verfahren und eine Anordnung zur Ermittlung von Druckern, die über eine drahtlose Verbindung nutzbar sind, sowie ein entsprechendes Computerprogramm und ein entsprechendes computerlesbares Speichermedium, welche insbesondere einsetzbar sind beim Drucken in WLAN- oder Bluetoothumgebungen (WLAN = Wireless Local Area Network, Bluetooth: Funkprotokoll gemäß IEEE 802.15.1).

### Stand der Technik

Lange bekannt sind Techniken, Drucker über Kabel an einen Computer (Endgerät) anzuschließen. Beispiele dafür sind IEEE-1284, Ethernet oder USB. Das ist jedoch auch ein Nachteil bei der Aufstellung eines Geräts. Es muss sich entweder nahe am Computer befinden, wie bei IEEE-1284 oder USB, oder es muss zumindest ein Netzwerkanschluss vorhanden sein (Ethernet). Soll ein Drucker von verschiedenen Computern aus genutzt werden, erhöht sich der Aufwand beim Anschluss der Geräte. Drucker mit einer Schnittstelle nach IEEE-1284 oder USB werden an einen Computer angeschlossen, der diese den anderen Arbeitsstationen zur Verfügung stellt. Drucker mit Netzwerkanschluss belegen zumindest noch einen Anschluss an der Netzwerkverkabelung. In dieser Umgebung mit einem mobilen Endgerät zu drucken ist nicht möglich, weil keine gemeinsame Schnittstelle zur Kommunikation vorhanden ist. Sollte es sich bei dem mobilen Endgerät um einen Laptop handeln, kann er in der Regel an das Netzwerk angeschlossen werden. Allerdings geht dann der Vorteil der Mobilität verloren. Außerdem ist man gezwungen, auf diesem Gerät Druckertreiber zu installieren. Andere mobile Endgeräte, wie Smartphones oder PDAs, verfügen über keine Schnittstelle für ein kabelgebundenes Netzwerk. Für sie existiert in diesem Szenario weiterhin keine Möglichkeit, einen der vorhandenen Drucker zu nutzen. Wird jedoch dieses Netzwerk, in dem die Drucker eingerichtet sind, über ein Gateway mit einem WLAN verbunden, können die Drucker von mobilen Endgeräten ebenso genutzt werden.

Seit einiger Zeit gibt es Drucker, die für die Verbindung zum Computer drahtlose Schnittstellen wie Bluetooth oder WLAN/Wi-Fi (Wi-Fi: alternative Bezeichnung für WLAN) verwenden. Die Reichweite dieser Verbindungen beträgt bis zu einigen hundert Metern, wenn zwischen den Stationen Sichtkontakt besteht. Sie wird reduziert, wenn Wände oder Gegenstände zwischen den Stationen stehen. Es ist also grundsätzlich möglich, Computer und Drucker in unterschiedlichen Räumen unterzubringen, ohne ein Kabel zur Verbindung zu verlegen. Gleichzeitig kann der Drucker von verschiedenen Computern aus genutzt werden, ohne dass der oben beschriebene Aufwand nötig ist. Hier stellt sich dasselbe Problem wie bei kabelgebundenen Druckern: Das mobile Gerät hat den passenden Druckertreiber nicht installiert, sofern es dazu überhaupt in der Lage ist. Handelt es sich um einen Laptop mit dem Betriebssystem MS-Windows, MacOS, Linux o. ä., wird es möglich sein, einen Druckertreiber zu installieren. Für andere mobile Geräte wie Smartphones und PDAs ist auch dieser Weg nicht gangbar. Aufgrund der begrenzten Ressourcen dieser mobilen Geräte, wie geringer Speicher und unzureichender Prozessorleistung, ist es ausgeschlossen, für jede beliebige Kombination von mobilem Endgerät und Drucker Druckertreiber zu erstellen. Dieser Prozess wäre zudem dynamisch, weil neue Drucker und neue Endgeräte neue Druckertreiber erzwingen.

Abgesehen von Speziallösungen für bestimmte Drucker an bestimmten mobilen Geräten gibt es daher keine allgemeine Lösung.

Eine dieser Lösungen ist die Software "HP iPrint Photo" der Firma HP. Diese bietet die Möglichkeit, drahtlos Bilder zu drucken. Dieses Programm hat allerdings einige gravierende Einschränkungen:
- der Ausdruck ist auf Drucker beschränkt, die eine bestimmte Druckerkontrollsprache (PCL3) verstehen.
- Die Größe des Ausdrucks ist auf ein Format (10cm x 15cm) festgelegt
- Dieses Programm läuft nur auf iPhones des Herstellers Apple.

Damit hat es neben dem oben skizzierten Problem der eingeschränkten Druckerwahl noch den Nachteil des kleinen Bildformats.

Eine weitere Software "Air Photo", ebenfalls für iPhones entwickelt, nutzt einen PC als Druckserver. Auf dem mobilen Endgerät wird ein Bild ausgewählt und per WLAN an den PC geschickt, der es auf einem angeschlossenen Drucker ausgibt. Dazu wird der PC mit einem eigenen Modul zum Druckserver für das iPhone. Der Benutzer am iPhone kann den Drucker also nicht frei wählen, außerdem muß jeder PC, auf dessen angeschlossenem Drucker gedruckt werden soll, zuvor mit dem speziellen Modul eingerichtet werden.

Die US Patent Anmeldungen 2003/0078965 A1 und 2005/044479 A1 sowie die europäische Patentanmeldung 1 460 529 A2 sind mit dem Drucken von mobilen Endgeräten aus befasst.

Die Aufgabe der Erfindung besteht somit darin, ein Verfahren und eine Anordnung zur Ermittlung von Druckern, die von einer Datenverarbeitungseinrichtung aus über eine drahtlose Kommunikationsverbindung nutzbar sind, sowie ein entsprechendes Computerprogramm und ein entsprechendes computerlesbares Speichermedium bereitzustellen, welche die Nachteile der bekannten Lösungen beheben sowie insbesondere die vorhandenen Drucker zu erkennen und dem Benutzer eines mobilen Endgeräts anzubieten.

Diese Aufgabe wird erfindungsgemäß durch die Merkmale in den Ansprüchen 1 und 6 bis 8 gelöst. Zweckmäßige Ausgestaltungen der Erfindung sind in den Unteransprüchen enthalten.

Ein besonderer Vorteil der Erfindung besteht darin, dass bei dem erfindungsgemäßen Verfahren zur Ermittlung von Druckern Datenverarbeitungseinrichtungen, vorzugsweise mobile Datenverarbeitungseinrichtungen in die Lage versetzt werden, eine Vielzahl von Druckern, welche eine Schnittstelle zu einem drahtlosen Netzwerk bereitstellen (z. B. Drucker mit WLAN-Anschluss), zu nutzen. Dies wird erreicht, indem erfindungsgemäß eine Suche nach verfügbaren Druckern mit solch einer Schnittstelle durchgeführt wird. Vorzugsweise erfolgt diese Suche durch die Datenverarbeitungseinrichtung nach Start durch eine Nutzerinteraktion oder auch automatisch. Eine solche Suche umfasst dabei z.B. die Suche nach Druckern, die eine Schnittstelle zu einem Funknetz bereitstellen; für die Erfindung ist es unerheblich, ob die Drucker selbst über eine Schnittstelle zu kabellosen Netzwerken verfügen, oder ob diese Schnittstelle über ein weiteres Gerät realisiert wird, mit dem der Drucker kommunikativ verbunden ist. Die bei der Suche gefundenen Drucker werden mit einer Liste von registrierten Druckern und/oder Druckertreibern abgeglichen, und wenn eine Übereinstimmung festgestellt wird, der gefundene Drucker dem zugehörigen registrierten Drucker und/oder Druckertreiber zugeordnet. Hierfür kann eine Liste mit Übersetzungen von Druckernamen in die zugehörigen Druckertreibernamen verwendet werden. Diese Zuordnung kann automatisch erfolgen. Da aber von den Druckern bei einer Suchanfrage von Seiten der Datenverarbeitungseinrichtung oftmals Druckernamen zurückgegeben werden, die sich von den in der Liste registrierten Namen für diesen Drucker unterscheiden, erweist es sich als vorteilhaft, dass wenigstens ein Teil der gefundenen Drucker durch Nutzerinteraktion zugeordnet werden. Ein Beispiel sieht vor, dass auch bei unterschiedlichen Namen der Ausgleich automatisch durchgeführt wird.

Alternativ zu einer Suche nach Druckern, die eine Schnittstelle zu einem drahtlosen Netzwerk bereitstellen, kann ein solcher Drucker auch durch Nutzereingabe in die Datenverarbeitungseinrichtung vorgegeben werden. Vorzugsweise wird hierzu die Adresse des Druckers und ein zu dem Drucker gehöriger Druckertreiber vorgegeben. Vorzugsweise erfolgt die Vorgabe des Druckertreibers durch Auswahl aus der Liste der registrierten Druckertreiber.

Gefundene und vorgegebene Drucker werden in den nachfolgenden Schritten in gleicher Weise behandelt. Daher kann für die Schritte Ermittlung von installierten Druckertreibern und Erzeugung einer Liste mit nutzbaren Druckern der Begriff ,gefundener Drucker' durch den Begriff ,vorgegebener Drucker' ersetzt werden.

Die Liste der registrierten Druckern und/oder Druckertreibern kann dabei auf der Datenverarbeitungseinrichtung oder einem anderen Gerät, vorzugsweise einem Druckserver, gespeichert sein. Außerdem findet eine Ermittlung von Druckertreibern statt, die für einen Ausdruck tatsächlich genutzt werden können, d.h. nach Druckertreibern, die auf der Datenverarbeitungseinrichtung selbst oder einem anderen Gerät, vorzugsweise einem Druckserver, installiert sind. Die Ermittlung kann durch ein auf der Datenverarbeitungseinrichtung installiertes oder durch ein auf dem anderen Gerät installiertes Computerprogramm erfolgen. In einem Beispiel ist vorgesehen, dass die Datenverarbeitungseinrichtung eine Liste der gefundenen Drucker an den Druckserver übermittelt, der aus dieser Liste den oder die Drucker auswählt, für den oder die ein Druckertreiber verfügbar ist, und diese Liste der Datenverarbeitungseinrichtung übermittelt, so dass eine Liste der nutzbaren Drucker auf dem mobilen Endgerät vorliegt. Alternativ kann vorgesehen sein, dass vom Druckserver eine Liste der verfügbaren Druckertreiber übermittelt wird und diese auf der Datenverarbeitungseinrichtung mit den gefundenen Druckern abgeglichen wird, so dass auch in diesem Falle eine Liste der nutzbaren Drucker auf der Datenverarbeitungseinrichtung vorliegt.

In einem Beispiel ist vorgesehen, dass zwischen Datenverarbeitungseinrichtung und Druckserver ein Vermittlungsrechner geschaltet ist, mit dem sich die Datenverarbeitungseinrichtung und der Druckserver verbinden, damit der Vermittlungsrechner eine Verbindung zwischen der Datenverarbeitungseinrichtung und dem Druckserver herstellt.

Aus Druckern, die bei der Suche gefunden wurden und für die ein installierter Druckertreiber ermittelt wurde, wird eine Liste der von der Datenverarbeitungseinrichtung nutzbaren Drucker zusammengestellt, die dann als nutzbare Drucker innerhalb eines Druckmenüs in gewohnter Weise ausgewählt werden können.

Vorzugsweise wird das erfindungsgemäße Verfahren zumindest teilweise automatisch durchgeführt, so dass für einen Nutzer der Datenverarbeitungseinrichtung kein Unterschied zu der Nutzung eines herkömmlichen Druckmenüs zu erkennen ist. Nach Start des Druckvorgangs wird in einem Beispiel automatisch nach verfügbaren Druckern gesucht, und auch die Zuordnung der gefundenen Drucker zu den in der Liste registrierten Druckern und/oder Druckertreibern sowie die Ermittlung der installierten Druckertreiber erfolgt automatisch. Vorzugsweise erfolgen diese Schritte im Hintergrund. Als Ergebnis wird dem Nutzer eine Liste der nutzbaren Drucker angeboten. Diese Liste umfasst z.B. solche Drucker, für die ein installierter Druckertreiber ermittelt wurde. Dabei kann der Druckertreiber wie erwähnt auf der Datenverarbeitungseinrichtung selbst oder einem anderen Gerät, vorzugsweise einem Druckserver, installiert sein.

Falls die Liste der registrierten Drucker und/oder Druckertreiber auf einem anderen Gerät gespeichert ist, muss die Datenverarbeitungseinrichtung zumindest zeitweise kommunikativ mit diesem anderen Gerät verbunden sein, um die Zuordnung und/oder Ermittlung der zu einem gefundenen Drucker gehörigen Drucker und/oder Druckertreiber ausführen zu können. Diese Kommunikationsverbindung kann drahtlos oder drahtgebunden realisiert sein.

Wird durch den Nutzer der Datenverarbeitungseinrichtung ein Druckauftrag ausgelöst, um eine Datei auszudrucken, wird in einem Beispiel die Datei an einen Druckserver übermittelt, auf dem der zu dem ausgewählten nutzbaren Drucker gehörige Druckertreiber installiert ist und auf dem die Druckdaten erzeugt werden. Dabei kann die Datei von der Datenverarbeitungseinrichtung an den Druckserver übertragen werden. Es ist ebenso möglich, dass der Druckserver die Datei von einem entfernten Speicherort abruft, nachdem ihm von der Datenverarbeitungseinrichtung die Adresse dieses Speicherorts mitgeteilt wurde. Bei der Datenverarbeitungseinrichtung kann es sich um ein stationäres, vorzugsweise aber mobiles Endgerät handeln.

Die Druckdaten können von dem Druckserver an die Datenverarbeitungseinrichtung gesendet, vorzugsweise gestreamt, und von der Datenverarbeitungseinrichtung an den nutzbaren Drucker weitergeleitet werden. Falls zwischen dem Druckserver und dem nutzbaren Drucker eine Kommunikationsverbindung besteht, können die Druckdaten auch von dem Druckserver direkt an den nutzbaren Drucker gesendet werden.

Eine Anordnung nach der Erfindung weist mindestens einen Chip und/oder Prozessor auf, der (die) derart eingerichtet ist (sind), dass ein Verfahren zur Ermittlung von Druckern, die von einer Datenverarbeitungseinrichtung aus über eine drahtlose Kommunikationsverbindung nutzbar sind, ausführbar ist, wobei das Verfahren die folgenden Schritte umfasst:
- Ausführen einer Suche nach Druckern, die von der Datenverarbeitungseinrichtung über die drahtlose Kommunikationsverbindung kontaktierbar sind, oder Vorgabe mindestens eines Druckers (200), der eine Schnittstelle zu einem drahtlosen Netzwerk (1100) bereitstellt,
- Zuordnen gefundener oder vorgegebener Drucker zu registrierten Druckern und/oder Druckertreibern,
- für zugeordnete Drucker Ermittlung installierter Druckertreiber,
- Erzeugung einer Liste von für das Endgerät nutzbaren Drucker, wobei ein gefundener oder vorgegebener Drucker, für den ein installierter Druckertreiber ermittelt wurde, als nutzbarer Drucker angesehen wird.

Vorzugsweise umfasst die Anordnung mindestens eine Datenverarbeitungseinrichtung und mindestens einen Drucker, welcher eine Schnittstelle zu einem Funknetz aufweisen. Die Kommunikation in dem Funknetz kann beispielsweise mit einem WLAN- oder einem Bluetoothprotokoll realisiert werden.

Die Anordnung kann weiter ein kabelgebundenes Netzwerk umfassen, welches seinerseits mindesten einen Drucker umfasst, welcher über eine zumindest teilweise kabelgebundene Kommunikationsverbindung mit einem Gateway zu dem Netzwerk verbunden ist. Bei dem Gateway kann es sich um einen drahtlosen Zugangspunkt, wie beispielsweise einen Access Point, zu dem Netzwerk handeln.

Ein Computerprogramm zur Ermittlung von Druckern ermöglicht es einer Datenverarbeitungseinrichtung, nachdem es in den Speicher der Datenverarbeitungseinrichtung geladen worden ist, ein Verfahren zur Ermittlung von Druckern, die von einer Datenverarbeitungseinrichtung aus über eine drahtlose Kommunikationsverbindung nutzbar sind, durchzuführen, wobei das Verfahren die folgenden Schritte umfasst:
- Ausführen einer Suche nach Druckern, die von der Datenverarbeitungseinrichtung über die drahtlose Kommunikationsverbindung kontaktierbar sind, oder Vorgabe mindestens eines Druckers, der eine Schnittstelle zu einem drahtlosen Netzwerk bereitstellt,
- Zuordnen gefundener oder vorgegebener Drucker zu registrierten Druckern und/oder Druckertreibern,
- für zugeordnete Drucker Ermittlung installierter Druckertreiber,
- Erzeugung einer Liste von für das Endgerät nutzbaren Drucker, wobei ein gefundener oder vorgegebener Drucker, für den ein installierter Druckertreiber ermittelt wurde, als nutzbarer Drucker angesehen wird.

In einem weiteren Beispiel der Erfindung ist vorgesehen, dass das erfindungsgemäße Computerprogramm modular aufgebaut ist, wobei einzelne Module auf verschiedenen Datenverarbeitungseinrichtungen, beispielsweise einem ersten Endgerät und einem Druckserver, installiert sind. Beispiele sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 13 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Ermittlung von Druckern durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Ermittlung von Druckern, die von einer Datenverarbeitungseinrichtung aus über eine drahtlose Kommunikationsverbindung nutzbar sind, durchzuführen, wobei das Verfahren die folgenden Schritte umfasst:
- Ausführen einer Suche nach Druckern, die von der Datenverarbeitungseinrichtung über die drahtlose Kommunikationsverbindung kontaktierbar sind, oder Vorgabe mindestens eines Druckers, der eine Schnittstelle zu einem drahtlosen Netzwerk bereitstellt,
- Zuordnen gefundener oder vorgegebener Drucker zu registrierten Druckern und/oder Druckertreibern,
- für zugeordnete Drucker Ermittlung installierter Druckertreiber,
- Erzeugung einer Liste von für das Endgerät nutzbaren Drucker, wobei ein gefundener oder vorgegebener Drucker, für den ein installierter Druckertreiber ermittelt wurde, als nutzbarer Drucker angesehen wird.

Die Erfindung ermöglicht es, vorhandenen Drucker zu erkennen und dem Benutzer eines mobilen Endgeräts anzubieten. Die Erfindung wirkt auch, wenn Drucker aus einem kabelgebundenen Netzwerk über ein Gateway in einem kabellosen Netzwerk ihre Dienste anbieten. Sie werden dann genau so behandelt wie Drucker, die über einen eigenen direkten Zugang zum WLAN verfügen.

Die Erfindung löst darüber hinaus die bereits skizzierten Probleme mit Druckertreibern, indem eine Umgebung bereitgestellt wird, in der Druckdaten auf einem dritten Gerät in einem Format erzeugt werden, die über das Endgerät, das in Verbindung mit dem Drucker steht, an diesen Drucker weitergeleitet werden. Dazu wird als drittes Gerät ein Druckserver installiert, der die Aufgabe hat, Druckdaten in den verschiedenen Formaten, die für verschiedene Drucker erforderlich sind, zu erzeugen. Dieser Druckserver ist nicht an eine Erreichbarkeit durch die Drucker gebunden. Damit kann ein Druckserver für mehrere räumlich voneinander entfernte Druckumgebungen verwendet werden. Der Druckserver kommuniziert deshalb in der Regel nur mit dem Endgerät. Kann aber einer der Drucker, auf denen ausgedruckt werden soll, von diesem Druckserver direkt angesprochen werden, so können die Druckdaten ohne Umweg über das Endgerät an den Drucker geleitet werden.

Mobile Endgeräte, die über eines der Protokolle GPRS (General Packet Radio Service), WLAN, UMTS (Universal Mobile Telecommunications System) oder dgl. verfügen, besitzen üblicherweise auch die Fähigkeit, weitere Anwendungen zu installieren, um diese Möglichkeiten auch zu nutzen. Diese Anwendungen könnten auch im Endgerät fest installiert sein. Damit ist das Gerät aber unflexibel, weil der Hersteller des Geräts nicht alle Anforderungen der Benutzer berücksichtigen kann. Sinnvollerweise werden diese Endgeräte dem Benutzer anbieten, weitere Anwendungen zu installieren. Jeder Hersteller eines mobilen Endgeräts bietet deshalb eine Programmierschnittstelle zur Ergänzung des Betriebssystems oder der vorinstallierten Anwendungen an.

Abhängig vom mobilen Endgerät, dem darauf installierten Betriebssystem und vorhandenen Anwendungen sind folgende Module notwendig:
a. Suche nach Druckern
b. Bei Betriebssystemen auf mobilen Endgeräten, die eine eigene Druckerverwaltung anbieten, werden die neu gefundenen Drucker in diese Liste aufgenommen
c. Verbindung zum Druckserver
d. Abgleich der Listen mit gefundenen und registrierten Druckern (Druckerlisten)
e. Austausch von Dateien (Dokumenten) und/oder Druckdaten
f. Für Geräte, die bisher keine Druckunterstützung anboten, wird eine einfache Anwendung eingerichtet, die eine Auswahl des Druckers ermöglicht und die Daten an den ausgewählten Drucker überträgt.

Die Suche der Drucker kann auf verschiedenen Wegen geschehen. Es können einerseits bekannte Verfahren zur automatischen Erkennung von Netzwerkdiensten in IP-Netzen, wie "Bonjour", das von der Firma Apple entwickelt wurde, verwendet werden. Das ist das am weitesten verbreitete Protokoll, welches von fast allen Druckern mit WLAN-Anschluss unterstützt wird. Eine andere Möglichkeit ist die Verwendung der Protokolle mDNS (Multicast Domain Name System) und UpnP (Universal Plug and Play). Bei Druckern mit Bluetooth-Schnittstelle liefert der Drucker mit dem Protokoll "Service Discovery" die nötigen Informationen.

Die bei dieser Suche ermittelten Druckernamen können von den Namen der Druckertreiber auf dem Druckserver abweichen. Um das Problem zu umgehen, wird eine Liste der häufigsten Drucker- und Druckertreibernamen vorgehalten. Diese Liste kann auf dem mobilen Endgerät oder dem Druckserver hinterlegt sein. Sollte ein Drucker gefunden werden, der nicht in dieser Liste aufgeführt ist, wird dem Benutzer angeboten, einen passenden Druckertreiber zu wählen. Dieser Drucker kann ebenfalls in die Liste aufgenommen werden, um unnötige Benutzerinteraktion beim nächsten Druckauftrag zu vermeiden.

Nach diesem Abgleich findet ein weiterer Abgleich statt. Jetzt wird geprüft, ob und welche Druckertreiber für die gefundenen Drucker auf dem Druckserver installiert sind. Auch hier kann der Abgleich auf zwei Arten erfolgen: Anhand einer vorab vom Druckserver übermittelten Liste, oder die Liste der gefundenen und im Namen bereinigten Drucker wird an den Druckserver gesendet, der diese mit den installierten Druckertreibern abgleicht und die Liste der unterstützten, nutzbaren Drucker zurückliefert.

Bei Geräten, die keines der Protokolle beherrschen, um eine automatische Suche nach verfügbaren Druckern durchzuführen, kommt ein einfacheres Verfahren zum Einsatz. Dazu ist es nötig, die Adresse des gewünschten Druckers zu kennen. Auf dem mobilen Endgerät wird hierzu ein Dialog angeboten, in dem die Adresse des Druckers und der Druckertreiber eingegeben wird. Dazu wird auf die Listen der registrierten Drucker und/oder Druckertreiber zurückgegriffen, die gerade beschrieben wurden.

Auf dem mobilen Endgerät ist jetzt eine Liste der nutzbaren Drucker verfügbar. Dies sind die Drucker, die gefunden und denen ein installierter Druckertreiber auf dem Druckserver zugeordnet worden sind. Selbstverständlich kann die Liste auch nur einen Drucker umfassen.

Die Erfindung wird nachfolgend unter Bezugnahme auf die Figuren der Zeichnungen an einem Beispiel näher erläutert. Es zeigt:
- Figur 1: Schematische Veranschaulichung einer beispielhaften Netzwerkumgebung zur Ausführung des erfindungsgemäßen Verfahrens,
- Figur 2: schematische Veranschaulichung des Abgleiches von Listen.

Im folgenden soll die Erfindung speziell am Beispiel eines mobilen Endgerätes 100 näher beschrieben werden, welches verfügbare Drucker 200 mit einem WLAN-Anschluss sucht und einen Druckauftrag auf einem Druckserver 300 startet. Die Erfindung ist aber nicht auf dieses Beispiel eingeschränkt, sondern umfasst vielmehr auch Beispiele, bei denen andere Protokolle zur drahtlosen Datenübertragung genutzt werden, oder der Druckauftrag auf dem mobilen Endgerätes 100 ausgeführt wird, d.h. dass die Druckdaten durch einen auf dem mobilen Endgerätes 100 installierten Druckertreiber generiert werden.

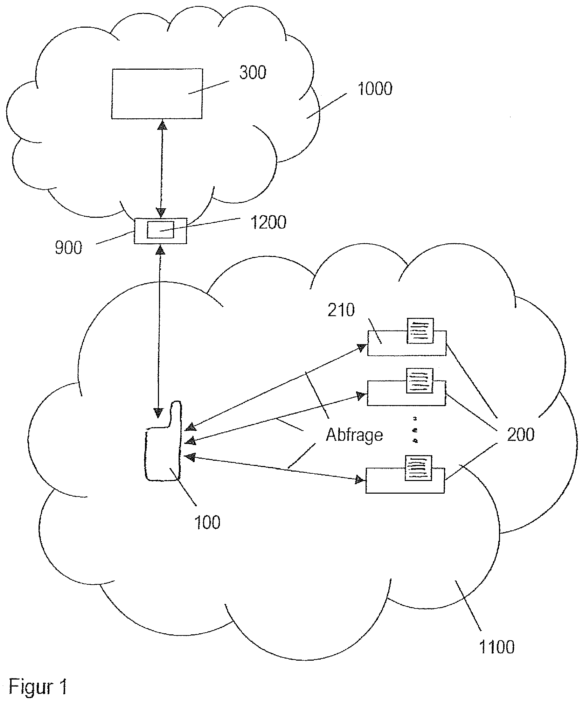

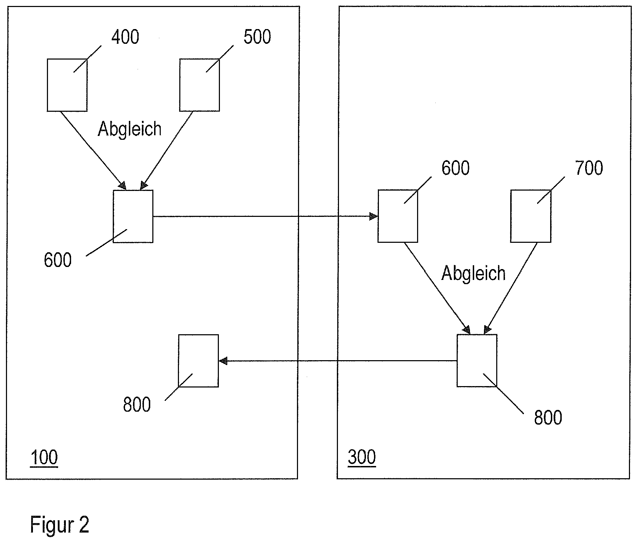

Ein Benutzer kommt mit seinem mobilen Endgerät 100 in eine neue Umgebung, z.B. ein Techniker in ein Großraumbüro (vgl. Figur 1). Er startet eine Suche nach verfügbaren Druckern 200. Nach dieser Suche besitzt er eine Liste 400 der verfügbaren Drucker. Diese Liste 400 wird wiederum mit einer Liste 500 von registrierten Druckertreibernamen abgeglichen (vgl. Figur 2). Damit ist sicher gestellt, dass die gefundenen Drucker 200 auch einem installierten Druckertreiber zugeordnet werden können. Jetzt ist es möglich, die Liste 600 der zugeordneten Drucker 200 und/oder Druckertreiber entweder mit einer vom Druckserver 300 bezogenen Liste 700 abzugleichen, oder die Liste 600 der gefundenen und zugeordneten Drucker 200 und/oder Druckertreiber an den Druckserver 300 zu schicken, um dort einen Abgleich vorzunehmen. In beiden Fällen besitzt der Benutzer hinterher eine Liste 800 der nutzbaren Drucker 210.

Neben der Erreichbarkeit ist jetzt gewährleistet, dass der Druckserver 300 die nutzbaren Drucker 210 auch unterstützt. Ohne Anwendung der Erfindung wäre der Benutzer gezwungen, auf seinem mobilen Endgerät 100, nachdem die verfügbaren Drucker 200 manuell ermittelt wurden, die passenden Druckertreiber zu installieren.

Hier liegt ein weiterer Vorteil der Erfindung: Die Installation von Druckertreibern ist nur möglich auf Systemen, die dies grundsätzlich zulassen und leistungsfähig genug sind, Druckdaten für den Drucker zu erzeugen. Dies ist nicht möglich, wenn es sich bei dem mobilen Endgerät um ein Gerät mit begrenzten Ressourcen wie z.B. ein Handy oder ein PDA mit WLAN-Anschluss handelt. Selbst wenn das mobile Endgerät in der Lage ist, einen Druckertreiber zu installieren zu betreiben, bleibt ein weiteres Problem für den Benutzer: In jeder neuen Umgebung können Drucker stehen, für die er noch keinen Druckertreiber installiert hat. Er ist also gezwungen, fortwährend neue Druckertreiber zu installieren, während die bereits installierten beim aktuellen Einsatz nicht benötigt werden. Die oben erwähnte Software "HP iPrint Photo" fällt in diese Kategorie, es werden nur Drucker mit einer bestimmten Druckersprache unterstützt, und die Software läuft nur auf einem bestimmten Gerät.

Bei Anwendung der Erfindung verfügt der Techniker jetzt über eine Liste 800 der nutzbaren Drucker 210 in seiner Umgebung. Sollte er den Platz wechseln, wird der Vorgang wiederholt, und nach kurzer Zeit verfügt der Benutzer wieder über eine Liste 800 der nutzbaren Drucker 210. Es ist für ihn also nicht mehr nötig, sein mobiles Endgerät 100 an die Umgebung anzupassen. Möchte er Drucken, wählt er ein Dokument und einen Drucker 200 aus, und wartet, bis die Daten ausgedruckt sind.

Aus Sicherheitsgründen ist es häufig nicht möglich, von außen direkt Verbindung mit einem Druckserver 300 in einem LAN 1000 aufzunehmen. Um trotzdem eine Verbindung zwischen dem Druckserver 300 und dem mobilen Endgerät 100 zu ermöglichen, auch wenn sich diese in verschiedenen Netzen befinden, wird auf dem Gateway 900 des Netzes 1100, in dem sich der Druckserver befindet, ein weiteres Modul 1200 installiert, das auf Verbindungswünsche von außen reagiert und diesen Verbindungswunsch an den Druckserver 300 weiterleitet.

Die Erfindung beschränkt sich nicht auf die vorstehend angegebenen Beispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

### Bezugszeichenliste

- 100: mobiles Endgerät
- 200: Drucker
- 210: nutzbarer Drucker
- 300: Druckserver
- 400: Liste verfügbarer Drucker
- 500: Liste registrierter Drucker
- 600: Liste zugeordneter Drucker
- 700: Liste installierter Druckertreiber
- 800: Liste nutzbarer Drucker
- 900: Gateway
- 1000: LAN
- 1100: Netzwerk
- 1200: Modul

## Patentansprüche

1. Verfahren zur Ermittlung von Druckern, die von einem mobilen Endgerät aus über eine drahtlose Kommunikationsverbindung nutzbar sind, wobei das Verfahren die folgenden Schritte umfasst:
Ausführen einer Suche nach Druckern (200), die einen drahtlosen Zugangspunkt zu einem kabelgebundenen Netzwerk (1100), in welchem die Drucker (200) installiert sind, bereitstellen, wobei die Suche durch das mobile Endgerät ausgeführt wird,
Bereinigen der bei der Suche ermittelten Drucker auf dem Endgerät, indem die bei der Suche ermittelten Drucker mit Einträgen in einer auf dem Endgerät hinterlegten Liste mit häufigsten Drucker- und Druckertreibernamen verglichen werden, wobei für jeden gefundenen Drucker, der nicht in der hinterlegten Liste aufgeführt wird, ein zugehöriger Druckertreibername durch einen Benutzer des Endgeräts gewählt wird, und diese gefundenen Drucker mit zugehörigem Druckertreibernamen in die hinterlegte Liste aufgenommen werden,
Senden einer Liste der bereinigten ermittelten Drucker mit zugehörigen Druckertreibernamen vom Endgerät an einen Druckserver (300),
für die bereinigten ermittelten Drucker in der gesendeten Liste Ermittlung von auf dem Druckserver installierten Druckertreibern durch den Druckserver (300),
Erzeugung einer Liste (800) von für das Endgerät nutzbaren Drucker (210) durch den Druckserver (300), wobei ein bereinigter ermittelter Drucker (200) in der gesendeten Liste, für den ein installierter Druckertreiber ermittelt wurde, als nutzbarer Drucker (210) angesehen wird, und
Zurückliefern der Liste mit nutzbaren Druckern vom Druckserver an das Endgerät.

2. Verfahren nach Anspruch 1,
**dadurch gekennzeichnet dass**,
das Bereinigen automatisch erfolgt.

3. Verfahren nach einem der voranstehenden Ansprüche,
**dadurch gekennzeichnet, dass**
bei Ausführung eines Druckauftrags Druckdaten auf dem Druckserver (300) erzeugt werden.

4. Verfahren nach Anspruch 3,
**dadurch gekennzeichnet, dass**
die Druckdaten von dem Druckserver (300) an das mobile Endgerät und von dem mobilen Endgerät an einen für den Ausdruck gewählten, nutzbaren Drucker (210) gesendet werden.

5. Verfahren nach Anspruch 3,
**dadurch gekennzeichnet, dass**
die Druckdaten von dem Druckserver (300) an einen für den Ausdruck gewählten, nutzbaren Drucker (210) gesendet werden.

6. Anordnung mit einem Druckserver (300) und mindestens einem mobilen Endgerät, wobei die Anordnung derart eingerichtet ist, dass ein Verfahren zur Ermittlung von Druckern gemäß einem der Ansprüche 1 bis 5 ausführbar ist.

7. Computerprogramm, das es einem mobilen Endgerät und einem Druckserver ermöglicht, nachdem es in Speichermittel des mobilen Endgeräts und des Druckservers geladen worden ist, ein Verfahren zur Ermittlung von Druckern gemäß einem der Ansprüche 1 bis 5 durchzuführen.

8. Computerlesbares Speichermedium, auf dem ein Programm gespeichert ist, das es einem mobilen Endgerät und einem Druckserver ermöglicht, nachdem es in Speichermittel des mobilen Endgeräts und des Druckservers geladen worden ist, ein Verfahren zur Ermittlung von Druckern gemäß einem der Ansprüche 1 bis 5 durchzuführen.

9. Verfahren, bei dem ein Computerprogramm nach Anspruch 8 aus einem elektronischen Datennetz, wie beispielsweise aus dem Internet, auf das mobile Endgerät und den Druckserver, die an das Datennetz angeschlossen sind, heruntergeladen wird.

## Claims

1. A method for detecting printers that can be used from a mobile terminal via a wireless communication link, wherein the method comprises the following steps:
performing a search for printers (200) which provide a wireless interface to a wired network (1100) on which the printers (200) are installed, wherein the search is performed by the terminal,
validating the printers detected during the search on the terminal by comparing the printers found in the search with entries in a list of the most frequent printer and printer driver names stored on the terminal, wherein for every printer found that is not included in the stored list, an associated printer driver name is chosen by the user of the terminal, and this found printer with its associated printer driver name are entered into the stored list,
transmitting of a list of the validated detected printers with associated printer driver names from the terminal to a print server (300),
ascertaining, for the validated detected printers in the transmitted list, printer drivers installed on the print server, by the print server (300),
generation by the print server (300) of a list (800) of printers (210) that can be used by the terminal, wherein a validated detected printer (200) in the transmitted list for which an installed printer driver has been detected is considered to be a usable printer (210), and
transmitting the list of usable printers from the print server back to the terminal.

2. The method according to claim 1,
**characterised in that**
the validation occurs automatically.

3. The method according to one of the preceding claims,
**characterised in that**
when a print request is carried out print data is generated on the print server (300).

4. The method according to claim 3,
**characterised in that**
the print data is sent from the print server (300) to the mobile terminal and from the mobile terminal to a usable printer (210) chosen for printing out.

5. The method according to claim 3,
**characterised in that**
the print data is sent from the print server (300) to a usable printer (210) selected for the printing out.

6. An arrangement with a print server (300) and at least one mobile terminal, wherein the arrangement is set up so that a method for detecting printers can be carried out according to one of claims 1 to 5.

7. A computer program which makes it possible, once it has been loaded into the storage means of the mobile terminal and a printer server, for a mobile terminal and a printer server to carry out a method for detecting printers according to one of claims 1 to 5.

8. A computer readable storage means on which a program is stored which makes it possible, once it has been loaded into the storage means of the mobile terminal and a printer server, for a mobile terminal and a printer server to carry out a method for detecting printers according to one of claims 1 to 5.

9. A method in which a computer program according to claim 8 is downloaded from an electronic data network, such as for example from the internet, onto the mobile terminal and the print server which are connected to the data network.

## Revendications

1. Procédé destiné à déterminer des imprimantes, qui à partir d'un terminal mobile sont utilisables via une connexion de communication sans fil, le procédé comprenant les étapes suivantes :
de la réalisation d'une recherche par imprimantes (200), qui mettent à disposition un point d'accès sans fil à un réseau (1100) câblé dans lequel les imprimantes (200) sont installées, la recherche étant réalisée par le terminal mobile,
de la rectification sur le terminal des imprimantes déterminées pendant la recherche, en ce que les imprimantes trouvées sont comparées avec des mentions figurant sur une liste sauvegardée sur le terminal, avec des pilotes d'imprimantes et des noms de pilotes d'imprimantes les plus fréquents, sachant que pour chaque imprimante trouvée qui n'est pas mentionnée dans la liste sauvegardée, un nom de pilote d'imprimante correspondant est choisi par un utilisateur du terminal et lesdites imprimantes trouvées sont reprises dans la liste sauvegardée, avec un nom de pilote d'imprimante correspondant,
de l'envoi par le terminal à un serveur d'impression (300) d'une liste des imprimantes déterminées rectifiées avec noms de pilotes d'imprimantes correspondants,
pour les imprimantes déterminées rectifiées dans la liste envoyée, de la détermination par le serveur d'impression (300) de pilotes d'imprimantes installés sur le serveur d'impression,
de la création par le serveur d'impression (300) d'une liste (800) d'imprimantes (210) utilisables par le terminal, une imprimante (200) déterminée rectifiée dans la liste envoyée pour laquelle un pilote d'imprimante installé a été déterminé étant considérée comme une imprimante (210) utilisable, et
de l'envoi en retour de la liste avec des imprimantes utilisables du serveur d'impression au terminal.

2. Procédé selon la revendication 1,
**caractérisé en ce que**
la rectification s'effectue automatiquement.

3. Procédé selon l'une quelconque des revendications précédentes,
**caractérisé en ce que**
lors de la réalisation d'un ordre d'impression, des données d'impression sont générées sur le serveur d'impression (300).

4. Procédé selon la revendication 3,
**caractérisé en ce que**
les données d'impression sont envoyées par le serveur d'impression (300) au terminal mobile et du terminal mobile à une imprimante (210) utilisable, choisie pour l'impression.

5. Procédé selon la revendication 3,
**caractérisé en ce que**
les données d'impression sont envoyées par le serveur d'impression (300) à une imprimante (210) utilisable, choisie pour l'impression.

6. Agencement comprenant un serveur d'impression (300) et au moins un terminal mobile, l'agencement étant ménagé de telle sorte qu'un procédé destiné à déterminer des imprimantes selon l'une quelconque des revendications 1 à 5 soit réalisable.

7. Programme informatique, qui après avoir été chargé dans des mémoires du terminal mobile et du serveur d'impression, permet à un terminal mobile et à un serveur d'impression de réaliser un procédé de détermination d'imprimantes selon l'une quelconque des revendications 1 à 5.

8. Support de mémorisation lisible par informatique, sur lequel est mémorisé un programme, qui après avoir été chargé dans des mémoires du terminal mobile et du serveur d'impression, permet à un terminal mobile et à un serveur d'impression de réaliser un procédé de détermination d'imprimantes selon l'une quelconque des revendications 1 à 5.

9. Procédé pour lequel on télécharge un programme informatique selon la revendication 8 à partir d'un réseau de données électroniques, comme par exemple à partir d'Internet sur le terminal mobile et sur le serveur d'impression qui sont connectés sur le réseau de données.
